# EUROPÄISCHE PATENTSCHRIFT

(11) **EP 2 178 729 B1**
(45) Veröffentlichungstag und Bekanntmachung des Hinweises auf die Patenterteilung: **06.09.2017**
(21) Anmeldenummer: 08773870.4
(22) Anmeldetag: 04.07.2008
(51) Int. Cl.: B60T 17/02, B60W 30/18, F02D 41/04

(54) **VERFAHREN UND VORRICHTUNG ZUM ERMITTELN VON SCHUBBETRIEBEN EINES FAHRZEUGS**
METHOD AND DEVICE FOR DETERMINING OVERRUN CONDITIONS OF A VEHICLE
PROCÉDÉ ET DISPOSITIF POUR DÉTERMINER LE FONCTIONNEMENT EN ROUE LIBRE D'UN VÉHICULE

(30) Priorität: 16.07.2007 DE 102007032968
(43) Veröffentlichungstag der Anmeldung: 28.04.2010
(73) Patentinhaber: KNORR-BREMSE Systeme für Nutzfahrzeuge GmbH, 80809 München (DE)
(72) Erfinder: LEINUNG, Andreas, 81377 München (DE)
(74) Vertreter: Mattusch, Gundula
(86) Internationale Anmeldenummer: PCT/EP2008/005476
(87) Internationale Veröffentlichungsnummer: WO 2009/010199

(56) Entgegenhaltungen:
- EP-A- 1 637 385
- WO-A-2006/071170
- DE-A1- 19 737 051
- JP-A- 11 013 507
- US-A1- 2005 178 622
- US-A1- 2005 251 332
- US-A1- 2005 278 118
- US-A1- 2006 030 992
- US-B1- 6 292 726

## Beschreibung

Die Erfindung betrifft eine Vorrichtung zum Ermitteln eines Schubbetriebs eines Fahrzeugs, insbesondere eines Nutzfahrzeugs, mit einer Verarbeitungseinrichtung, die zur Ermittlung des Schubbetriebs dient.

Weiterhin betrifft die Erfindung ein Verfahren zum Ermitteln eines Schubbetriebs eines Fahrzeugs, insbesondere eines Nutzfahrzeugs.

Allgemein ist im Stand der Technik bekannt, bei Fahrzeugen, insbesondere bei Nutzfahrzeugen, einen momentanen beziehungsweise vorliegenden Schubbetrieb des Fahrzeugs zu ermitteln. In Kenntnis des Vorliegens des Schubbetriebs können diverse Fahrzeugkomponenten beispielsweise über eine Verarbeitungs- beziehungsweise Berechnungs- und Steuereinrichtung gesteuert beziehungsweise angesteuert werden, um dadurch auf eine energiesparsame Weise betrieben zu werden. Eine dieser Fahrzeugkomponenten kann beispielsweise eine Luftaufbereitungsanlage sein. So werden zum Beispiel in Nutzfahrzeugen solche Luftaufbereitungsanlagen, insbesondere elektronische Luftaufbereitungsanlagen, zur Versorgung von Druckluftverbraucherkreisen mit Druckluft über Steuereinrichtungen gesteuert. Derartige Druckluftverbraucherkreise sind beispielsweise Bremskreise eines Nutzfahrzeugsbremssystems, ein Nebenverbraucherkreis, ein Anhängerversorgungskreis, ein Feststellbremsanlagenkreis, ein Luftfederungskreis etc. Daher ist die Druckluftversorgung beziehungsweise die Luftaufbereitung eine zentrale Komponente im Nutzfahrzeugbremssystem. Insbesondere für das Nutzfahrzeugbremssystem steuert die Luftaufbereitungsanlage die Aufnahme von Bremsenergie in der Form von komprimierter Luft. Damit ist sie ein Zwischenstück beziehungsweise Bindeglied zwischen einem zur Druckluftbeschaffung beziehungsweise Druckluftversorgung vorgesehenen Kompressor, der öl- und wasserhaltige Luft fördert, und den Druckluftverbraucherkreisen im Nutzfahrzeug.

Elektronisch gesteuerte Luftaufbereitungsanlagen sind bereits im Stand der Technik bekannt. Eine derartige Luftaufbereitungsanlage steuert beispielsweise mittels einer ihr zugeordneten elektronischen Verarbeitungseinrichtung beziehungsweise Steuereinrichtung die Aufnahme von Druckluft, deren Filterung und Trocknung, sowie die Verteilung der so gereinigten Druckluft auf die verschiedenen Druckluftverbraucherkreise. Dies erfolgt im Allgemeinen in Verbindung mit bestimmten Kompressoren unterschiedlicher Bauart und weiterhin unter Verwendung von Fahrzeuginformationen aus anderen im Nutzfahrzeug vorgesehenen Steuergeräten beziehungsweise Steuereinrichtungen. Jedoch führt die Luftaufbereitung durch die Luftaufbereitungsanlage zu einem hohen Energie- beziehungsweise Kraftstoffverbrauch. Dies rührt daher, dass für die Druckluftbeschaffung beziehungsweise die Bereitstellung der Druckluft der Kompressor beispielsweise über eine kraftschlüssige Verbindung durch einen Verbrennungsmotor des Nutzfahrzeugs angetrieben werden muss. Im Stand der Technik wurden bereits Maßnahmen zur Reduzierung des Kraftstoffverbrauchs ergriffen, wobei mehrere und teilweise auch unterschiedliche Ansätzen verfolgt werden. Ein Ansatz ist beispielsweise eine Umschaltung eines Kompressorwiderstands auf einen Leerlaufbetrieb, bei dem lediglich die für den Leerlauf erforderliche Antriebsleistung für den Verbrennungsmotor anfällt. Diese Umschaltung erfolgt üblicherweise bei Fahrtzuständen des Nutzfahrzeugs, bei denen beispielsweise das Bremssystem mit Druckluft gefüllt ist und keine weitere Druckluftförderung notwendig ist. Daher verfügen die für die Umschaltung tauglichen Kompressoren über eine pneumatische Steuerleitung, die so genannte ESS-Leitung. Über die Steuerleitung werden diese Kompressoren durch die Luftaufbereitungsanlage angesteuert, wodurch die Förderung der Druckluft gegen die in den Druckluftverbraucherkreisen vorliegenden Druckluftniveaus unterbrochen wird. Der Kompressor pumpt in diesem Leerlaufbetrieb beispielsweise die Luft im Kreis und/oder tauscht sie mit der Umgebung aus. Ein weiterer Ansatz besteht darin, die kraftschlüssige Verbindung zwischen dem Verbrennungsmotor und dem Kompressor während des Leerlaufbetriebs vollständig zu unterbrechen, wenn eine Luftaufbereitung nicht erforderlich ist. Dies kann beispielsweise durch eine Kompressorkupplung beziehungsweise eine zwischen dem Kompressor und Verbrennungsmotor vorgesehene Kupplung umgesetzt werden. Im Vergleich zum vorgenannten Ansatz wird in diesem Fall die Leerlauflast während des Leerlaufbetriebs des Kompressors gänzlich dem Verbrennungsmotor abgenommen. Weiterhin ist im Stand der Technik ein Ansatz bekannt, eine Synchronisierung eines Luftaufbereitungsbetriebs beziehungsweise einer Druckluftbeschaffung mit Schubbetrieben beziehungsweise Schubphasen des Verbrennungsmotors vorzunehmen, d.h. den Kompressor in den Schubbetrieben des Verbrennungsmotors anzutreiben. In diesem Zusammenhang werden unter Schubbetrieben des Nutzfahrzeugs die Betriebsphasen verstanden, in denen der Motor bei kraftschlüssig verbundenem Antriebsstrang durch die kinetische Energie des Fahrzeugs ohne Kraftstoffverbrauch geschleppt wird, beispielsweise in einem Motorbremsbetrieb. Insbesondere wird der Schubbetrieb des Nutzfahrzeugs bei den dem Stand der Technik angehörenden Luftaufbereitungsanlagen dadurch ermittelt, dass verschiedene, durch einen in dem Nutzfahrzeug üblicherweise verwendeten CAN-Bus zur Verfügung gestellte Informationen, wie beispielsweise ein negatives Motordrehmoment bei gleichzeitig eingelegtem Gang und nicht getrennter beziehungsweise kraftübertragender Kupplung, verwendet werden. Dabei wird bei derartigen elektronischen Luftaufbereitungsanlagen bei einer bestimmten Dauer dieses Zustands von mehreren Sekunden auf eine Gefällestrecke und damit einen längeren Erhalt des Schubbetriebs geschlossen, d.h. es wird von einer voraussichtlichen Dauer des Schubbetriebs ausgegangen. Somit wird der Schubbetrieb dazu verwendet, die Druckluftbeschaffung durchzuführen und damit eine Erhöhung des Druckluftniveaus in beispielsweise der Bremsanlage ohne Kraftstoffverbrauch (Overrun-Mode) zu bewirken. Bei einer Umschaltung des Kompressors von der Druckluftbeschaffung auf den Leerlaufbetrieb geht jedoch ein nicht zu vernachlässigendes Druckluftvolumen, beispielsweise aus Leitungen etc., verloren. Insbesondere wird dieses Druckluftvolumen bei der Umschaltung in die Umgebung abgeblasen. Daher sollte die Umschaltung nur dann erfolgen, wenn ein Schubbetrieb voraussichtlich länger anhält. Dies wird jedoch bei der Durchführung des Luftaufbereitungsbetriebs gemäß dem Stand der Technik nicht berücksichtigt; es wird lediglich das momentane Vorliegen des Schubbetriebs ermittelt. Dadurch wird bei unter Umständen nur sehr kurzen Schubbetrieben beziehungsweise Schubphasen des Verbrennungsmotors auf die verbrauchsfreie Luftförderung beziehungsweise die Luftaufbereitung umgeschaltet. Dabei kann insbesondere beim anschließenden Umschalten beispielsweise zum Leerlaufbetrieb des Kompressors eine Druckluftmenge ausgestoßen werden, die gleich oder sogar größer als die zuvor geförderte Druckluftmenge ist. Somit geht anstelle einer ursprünglich beabsichtigten Energieeinsparung Energie verloren. Ursache hierfür ist bei der derzeitigen Ermittlung des Schubbetriebs eine fehlende Sicherheit über den Fortbestand des Schubbetriebs. Zudem wirkt sich ein häufiger Wechsel zwischen den beiden Betrieben der Druckluftförderung und des Leerlaufs nachteilig auf die erreichbare Lebensdauer von entsprechenden schaltenden Komponenten aus. Aus den vorstehend genannten Gründen kann somit unter Umständen der Fall auftreten, dass der Kraftstoffverbrauch sogar erhöht wird. Seitens der Autohersteller besteht jedoch zunehmend die Kundenforderung nach Verbesserung der Funktionalität bei allen Energie und damit Kraftstoff verbrauchenden Komponenten.

Das Dokument US 2006/0030992 A1 beschreibt eine Steuervorrichtung, mit welcher eine Bremssteuerung eines Fahrzeugs auf der Grundlage der Steigung einer zu benutzenden Straße durchgeführt wird.

Aus der US 2005/0251332 A1 ist ein Verfahren bekannt, mit dem Höhen- und/oder Steigungsinformationen mit Punkten einer digitalen Karte korreliert werden.

Die US 6,292,726 B1 beschreibt ein Verfahren und ein System zum Steuern von Zubehör eines Fahrzeugs, das von dem Motor eines Fahrzeugs angetrieben wird, wobei das Ziel darin besteht, den Kraftstoffverbrauch zu reduzieren.

Es ist daher die Aufgabe der Erfindung, die gattungsgemäßen Vorrichtungen und Verfahren zum Ermitteln von Schubbetrieben von Fahrzeugen derart weiterzubilden, dass mehr Sicherheit über den Fortbestand des Schubbetriebs erlangt wird.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Vorrichtung weist die Merkmale von Anspruch 1 auf.

Die Höhenprofildaten der durch das Fahrzeug befahrenen und/oder zu befahrenden Strecke werden dabei beispielsweise von einem in dem Nutzfahrzeug vorgesehenen satellitengestützten (beispielsweise GPS nutzenden) Navigationssystem bezogen. Dieses Navigationssystem liefert in diesem Fall neben Positions- und Weginformationsdaten des Nutzfahrzeugs, die beispielsweise zur Zielfindung eines Fahrtziels vorgesehen sind, auch Höheninformationsdaten, aus denen dann die Höhenprofildaten der durch das Fahrzeug befahrenen und/oder zu befahrenden Strecke ermittelt werden können. Dies lässt sich insbesondere dadurch bewerkstelligen, dass dem Navigationssystem topographisches Kartenmaterial zur Verfügung gestellt wird. Durch eine Einbeziehung der Höhenprofildaten in die Ermittlung des Schubbetriebs, insbesondere in die Durchführung einer Synchronisierung des Luftaufbereitungsbetriebs mit dem Schubbetrieb, kann sichergestellt werden, dass sich das Fahrzeug tatsächlich in einem Streckengefälle befindet. Damit wird beispielsweise eine bedarfsgerechtere Durchführung der Synchronisierung des Luftaufbereitungsbetriebs mit dem Schubbetrieb gewährleistet. Insbesondere erfolgt eine bessere Ausnutzung der Schubbetriebe zur Luftaufbereitung. Ebenso kann die Ermittlung des voraussichtlichen Auftretens von Schubbetrieben auch für andere Fahrzeugkomponenten verwendet werden. Beispielsweise kann von dieser Ermittlung auch der Betrieb beziehungsweise Antrieb eines Generators zur Stromerzeugung abhängig gemacht werden, um beispielsweise eine elektrische Energiequelle aufzuladen. Somit kann der Kraftstoffverbrauch insgesamt reduziert werden. Die erfindungsgemäße Vorrichtung eignet sich dabei besonders für elektronisch gesteuerte Luftaufbereitungsanlagen, die eine elektronische Luftaufbereitung, zum Beispiel eine EAC (Elektronic Air Control), ausführen können. Vorzugsweise umfassen die Höhenprofildaten unter anderem vertikale Positionskoordinaten einer Vielzahl von Streckenpunkten oder Streckenbereichen entlang der befahrenen oder zu befahrenden Fahrtstrecke.

Die erfindungsgemäße Vorrichtung kann in vorteilhafter Weise derart weitergebildet sein, dass die Verarbeitungseinrichtung geeignet ist, weiterhin in Abhängigkeit von aktuellen Positionsdaten des Fahrzeugs und/oder aktuellen Fahrzeugparametern das voraussichtliche Auftreten des zumindest einen Schubbetriebs zu ermitteln. Insbesondere die Verwendung von aktuellen Fahrzeugparametern als auch der Streckenprofildaten der durch das Fahrzeug befahrenen oder noch zu befahrenden Strecke erhöht die Sicherheit der Ermittlung des Schubbetriebs und damit beispielsweise die Effizienz der Synchronisierung des Luftaufbereitungsbetriebs mit dem Schubbetrieb. Die durch die Verarbeitungseinrichtung verarbeiteten Positionsdaten umfassen unter anderem die momentane Position (x-Koordinate und y-Koordinate) des fahrenden Fahrzeugs entlang der Fahrtstrecke.

Weiterhin kann die erfindungsgemäße Vorrichtung so ausgebildet werden, dass die Verarbeitungseinrichtung geeignet ist, die Ermittlung des voraussichtlichen Auftretens des zumindest einen Schubbetriebs für einen dem Fahrzeug vorausliegenden Streckenabschnitt vorgegebener Länge vorzunehmen. Die Verarbeitungseinrichtung errechnet somit eine Prognose, die das voraussichtliche Auftreten zukünftiger Schubbetriebsphasen entlang der jeweils dem Fahrzeug vorausliegenden Streckenabschnitte der Fahrtstrecke umfasst.

Darüber hinaus kann die erfindungsgemäße Vorrichtung derart realisiert werden, dass die Verarbeitungseinrichtung geeignet ist, zu ermitteln, ob in dem vorgegebenen Streckenabschnitt ein oder mehrere Schubbetriebe voraussichtlich auftreten können. Damit wird die Sicherheit über den zeitlichen Fortbestand eines Schubbetriebs beziehungsweise einer Schubphase erhöht, da eine Vorausberechnung stattfindet.

Ferner kann die erfindungsgemäße Vorrichtung so gestaltet werden, dass die Verarbeitungseinrichtung geeignet ist, basierend auf den Höhenprofildaten auf zumindest einen Gefälleabschnitt der befahrenen und/oder zu befahrenden Strecke zu schließen, bei dem der zumindest eine Schubbetrieb voraussichtlich auftreten kann. Im Gegensatz zum Stand der Technik, bei dem nur anhand aktueller Fahrzeugparameter auf ein Streckengefälle geschlossen wird, wird durch die erfindungsgemäße Vorrichtung aufgrund des Höhenprofils der von dem Fahrzeug befahrenen und/oder zu befahrenden Strecke sichergestellt, dass ein Streckengefälle tatsächlich vorliegt. Vorzugsweise vergleicht die Verarbeitungseinrichtung dann eine Länge eines vorausliegenden Streckengefälles mit einer vorgegebenen Mindestlänge, wobei eine gezielte Ausnutzung von Schubbetriebsphasen lediglich auf solchen Gefällestrecken in Erwägung gezogen wird, deren Länge die vorgegebene Mindestlänge überschreitet.

Des Weiteren kann die erfindungsgemäße Vorrichtung derart weitergebildet sein, dass die Verarbeitungseinrichtung geeignet ist, basierend auf den Höhenprofildaten und/oder den aktuellen Fahrzeugparametern und/oder den aktuellen Positionsdaten eine Zeitdauer des voraussichtlich auftretenden Schubbetriebs zu ermitteln. Die Ermittlung beziehungsweise die errechnete Prognose umfasst vorzugsweise Angaben über einen voraussichtlichen Zeitpunkt des Beginns und einen Zeitpunkt über die voraussichtliche Beendigung des Schubbetriebs. Darüber hinaus kann die Ermittlung auch die zeitliche Dauer einer oder mehrerer voraussichtlich auftretender beziehungsweise bevorstehender Schubbetriebsphasen umfassen. Ebenso kann die Verarbeitungseinrichtung einen zeitlichen Abstand zu einer frühesten voraussichtlich auftretenden Schubbetriebsphase, deren Dauer voraussichtlich die vordefinierte Mindestdauer überschreitet, ermitteln. Insbesondere kann die Festlegung von Grenzwerten, wie beispielsweise die vordefinierte Mindestdauer, in Abhängigkeit von einem oder mehreren momentanen Fahrzeugparametern ermittelt werden. Ebenso können auch konstante Grenzwerte bereits vorbestimmt sein, die die Verarbeitungseinrichtung verwendet. Diese Grenzwerte können beispielsweise von einem nichtflüchtigen oder flüchtigen Speicher, beispielsweise ein ROM- oder RAM-Speicher, abgerufen werden. Durch die Berechnung einer voraussichtlichen Dauer des Schubbetriebs soll sichergestellt werden, dass kein unnötiges Umschalten zwischen einem Leerlaufbetrieb und einem Luftaufbereitungsbetrieb des Kompressors vorgenommen wird. So wird die Synchronisierung lediglich dann vorgenommen, wenn mit einer ausreichenden Dauer des Schubbetriebs gerechnet werden kann. Beispielsweise kann für diese Beurteilung eine vorbestimmte Grenzdauer festgelegt sein. Erst bei einer längeren Dauer als die Grenzdauer wird schließlich die Synchronisierung durchgeführt. Damit wird aufgrund der Beurteilung der voraussichtlichen Dauer des Schubbetriebs insgesamt die energiesparende Verwertbarkeit der Schubbetriebe gesteigert.

Die erfindungsgemäße Vorrichtung kann in vorteilhafter Weise derart weitergebildet sein, dass die Verarbeitungseinrichtung geeignet ist, bei Vorliegen eines momentanen Schubbetriebs basierend auf den Höhenprofildaten und/oder den aktuellen Fahrzeugparametern und/oder den aktuellen Positionsdaten eine verbleibende Dauer des momentanen Schubbetriebs zu ermitteln. So kann die Verarbeitungseinrichtung insbesondere jeweils Signale für momentane Schubbetriebsphasen erzeugen, die angeben, ob angesichts der voraussichtlich verbleibenden zeitlichen Dauer der entsprechenden Schubbetriebsphase eine technische Ausnutzung dieser Schubbetriebsphase eine Energiegewinnung und/oder Energiespeicherung für mindestens eine Fahrzeugkomponente bewirkt. Vorzugsweise kann vorgesehen sein, dass die Verarbeitungseinrichtung jeweils für eine bereits eingetretene, momentane Schubbetriebsphase ein Signal erzeugt, das dann, wenn die voraussichtlich verbleibende zeitliche Dauer der momentanen Schubbetriebsphase einen vordefinierten Grenzwert überschreitet, eine technische Ausnutzung dieser Schubbetriebsphase, die eine Energiegewinnung und/oder Energiespeicherung für mindestens eine Fahrzeugkomponente bewirkt, veranlasst. Ebenso kann vorgesehen sein, dass die Verarbeitungseinrichtung eine technische Ausnutzung einer momentanen oder voraussichtlich nächstkommenden Schubbetriebsphase zur Energiegewinnung und/oder Energiespeicherung für Fahrzeugkomponenten unterbindet, wenn deren zeitliche Dauer voraussichtlich kleiner ist als die Mindestdauer und diese Schubbetriebsphase einer Schubbetriebsphase vorangeht, deren Dauer größer als die vordefinierte Mindestdauer ist. Dies bedeutet, es wird erst jene voraussichtlich auftretende Schubbetriebsphase genutzt, deren Dauer für ausreichend lang prognostiziert wird. Die technische Ausnutzung kann beispielsweise in der Form einer Erzeugung, Förderung, Weiterleitung, Aufbereitung oder Speicherung von Druckluft in mindestens einer Fahrzeugkomponente vorgenommen werden.

Weiterhin kann die erfindungsgemäße Vorrichtung so ausgebildet werden, dass die Höhenprofildaten der durch das Fahrzeug zu befahrenden Strecke auf vorausberechneten Höhenprofildaten einer Gesamtstrecke beruhen, die durch eine Startposition und ein vorbestimmtes Fahrtziel des Fahrzeugs vorbestimmt ist. Somit werden Informationen über den zukünftigen Streckenverlauf geeignet ausgewertet, wodurch jeweils der Eintrittszeitpunkt, die Steigung und Dauer noch kommender Gefällestreckenabschnitte bis zum Fahrtziel über die Gesamtstrecke im Voraus bekannt ist. Insbesondere kann dadurch eine effiziente Planung der Synchronisierungen des Luftaufbereitungsbetriebs mit den voraussichtlich auftretenden Schubbetrieben vorgenommen werden. Die effiziente Planung berücksichtigt dabei lediglich jene Schubbetriebe, deren Dauer auch eine Energieersparnis einbringt. Dadurch kann beispielsweise eine Länge des Gefälles bis zu einem gewissen Ausmaß vorausberechnet werden, wodurch ein möglicher Schubbetrieb voraussehbar wird. Somit können unter Berücksichtigung des vom Fahrer eingegebenen Fahrtziels die Befüllvorgänge beziehungsweise Luftaufbereitungsbetriebe über den schon bekannten Streckenverlauf beziehungsweise die Gesamtstrecke geplant werden. Folglich werden die Schubbetriebe des Fahrzeugs vorhersagbar, wodurch die kinetische Energie des Fahrzeugs zur energiesparenden Luftbefüllung der Bremsanlage nutzbar gemacht wird. Dabei ist es insbesondere vorteilhaft, sämtliche Parameter zur automatischen Vorausberechnung des Schubbetriebs zu verwenden, um beispielsweise den Eintritt, die Dauer und das Ende des Schubbetriebs mithilfe des streckenbedingtem Steigungs-/Gefälle-Verlaufs zu erhalten. Darüber hinaus können gerade längere Strecken mit Gefälle schon im Voraus optimal für eine energiesparende Luftaufbereitung eingeplant und dann genutzt werden. Die Luftaufbereitung kann unter anderem die Wiederbefüllung der Luftaufbereitungsanlage mit Druckluft, die Regeneration von beispielsweise einem Lufttrockner der Luftaufbereitungsanlage, eine Luftdruckregelung im Bremssystem etc. umfassen.

Darüber hinaus kann die erfindungsgemäße Vorrichtung so realisiert werden, dass die Verarbeitungseinrichtung geeignet ist, einen Betrieb zumindest einer Fahrzeugkomponente in Abhängigkeit von dem ermittelten zumindest einen voraussichtlich auftretenden Schubbetrieb des Fahrzeugs zu steuern.

Bei der Komponente handelt es sich um eine Luftaufbereitungsanlage. Es können insbesondere eine Kupplung, ein Kompressor, ein Druckluftventil, ein Druckluftverteiler, eine Luftaufbereitungseinheit oder eine Luftreinigungspatrone anzusteuernde beziehungsweise zu steuernde Komponenten sein.

Weiterhin kann die erfindungsgemäße Vorrichtung auch so ausgebildet sein, dass Verarbeitungseinrichtung geeignet ist, die Luftaufbereitungsanlage derart zu steuern, dass sie bei Vorliegen des ermittelten voraussichtlich auftretenden Schubbetriebs ein Luftaufbereitungsbetrieb synchron durchführt. Insbesondere in Hinblick auf die Luftaufbereitung kann die Ermittlung des voraussichtlichen Auftretens zukünftiger Schubbetriebe und deren Ausnutzung besonders effizient sein, wie vorstehend erwähnt, da die Luftaufbereitungsanlage eine zentrale Rolle bei Druckluft verwendenden Fahrzeugen, insbesondere Nutzfahrzeugen, spielt.
In diesem Zusammenhang kann die Verarbeitungseinrichtung beispielsweise den Luftdruck einer pneumatischen Steuerleitung, die von einem Druckluftverteiler zu einem Kompressor führt, steuern. Weiterhin kann die Verarbeitungseinrichtung aber auch die Steuerung anhand elektrischer Signale ausüben. Über die Luftaufbereitungsanlage kann beispielsweise ein Kompressor oder ein Druckluftverteiler, eine Druckluftaufbereitungseinheit, ein Druckluftverbraucher oder weitere Komponenten pneumatisch angesteuert werden.

In diesem Zusammenhang kann vorgesehen sein, die erfindungsgemäße Vorrichtung so zu verwirklichen, dass die Verarbeitungseinrichtung geeignet ist, die Luftaufbereitungsanlage derart zu steuern, dass die Durchführung der Synchronisierung des Luftaufbereitungsbetriebs mit dem Schubbetrieb zumindest auf dem Vorliegen des zumindest einen Gefälleabschnitts basiert.

Weiterhin kann die erfindungsgemäße Vorrichtung so ausgeführt werden, dass die Verarbeitungseinrichtung geeignet ist, basierend auf Abstandsdaten des Fahrzeugs zu einem vorausfahrenden weiteren Fahrzeug zu beurteilen, ob der Luftaufbereitungsbetrieb ausgeführt wird. So kann insbesondere zwischen zufälligen und kurzzeitigen Schubbetrieben durch drohendes Auffahren auf einen Vordermann anhand der Abstandsdaten und streckenbedingten, längerfristigen und daher effizient zu nutzenden Schubbetrieben unterschieden werden.

Des Weiteren kann die erfindungsgemäße Vorrichtung derart realisiert werden, dass die Verarbeitungseinrichtung geeignet ist, die Luftaufbereitungsanlage derart zu steuern, dass der Luftaufbereitungsbetrieb durch Betreiben eines mit einem Antriebsstrang gekoppelten Kompressors durchgeführt wird, wobei die Verarbeitungseinrichtung geeignet ist, die Luftaufbereitungsanlage weiterhin derart zu steuern, dass der Luftaufbereitungsbetrieb beendet wird, wenn der Kompressor in einem Leerlauf betrieben wird und/oder von dem Antriebsstrang entkoppelt ist. Bei mit dem Antriebsstrang gekoppeltem Kompressor versorgt dieser die Luftaufbereitungsanlage oder die Luftaufbereitungseinheit mit Druckluft. Ist der Bedarf an Druckluft hingegen nicht mehr vorhanden, so wird der Kompressor beispielsweise in einen Leerlaufzustand geschaltet, in dem die Luftaufbereitungsanlage oder die Luftaufbereitungseinheit nicht mehr mit Druckluft oder nur mit Druckluft geringeren Drucks versorgt wird. Insbesondere kann die Verarbeitungseinrichtung ein Druckluftventil ansteuern. Ebenso lässt sich mittels der Verarbeitungseinrichtung ein Druckluftverteiler ansteuern. So steuert die Verarbeitungseinrichtung beispielsweise die Druckluftaufbereitungseinheit derart an, dass eine Druckluftpatrone der Druckluftaufbereitungseinheit während des Vorliegens eines Schubbetriebs nicht regeneriert wird. Hingegen erfolgt eine Regeneration der Druckluftpatrone vorzugsweise dann, wenn kein Schubbetrieb vorliegt. Insbesondere steuert die Verarbeitungseinrichtung mithilfe der Ermittlung der voraussichtlich auftretenden Schubbetriebe die Luftaufbereitungsanlage derart, dass Zeitpunkte, zu denen eine Regeneration der Druckluftpatrone, insbesondere eine Entfeuchtung und Reinigung, durchgeführt wird, in Abhängigkeit der Ermittlung der voraussichtlich auftretenden Schubbetriebe vorgezogen oder verschoben werden. Beispielsweise wird der Zeitpunkt der Regeneration höchstens auf Zeitpunkte während kürzerer Schubbetriebsphasen verlegt.

Darüber hinaus kann die erfindungsgemäße Vorrichtung so ausgebildet werden, dass die Verarbeitungseinrichtung geeignet ist, die Luftaufbereitungsanlage derart zu steuern, dass der Luftaufbereitungsbetrieb bei nicht vorliegendem Schubbetrieb des Fahrzeugs auch dann durchgeführt wird, wenn die Luftaufbereitung des Fahrzeugs zwingend erforderlich ist. Diese Maßnahme dient zur sicheren Versorgung der Luftaufbereitungsanlage mit Druckluft, die in jedem Fall gewährleistet sein muss, auch wenn kein Luftaufbereitungsbetrieb mit dem Schubbetrieb synchronisiert werden kann.

Ferner können die aktuellen Fahrzeugparameter, die die erfindungsgemäße Vorrichtung verwendet, zumindest ein Element aus Positions- oder Höhendaten des Fahrzeugs, der Fahrzeuggeschwindigkeit, Radgeschwindigkeiten und/oder Gierraten, einer Fahrzeugbeschleunigung, einem Druckluftniveaus einer Bremsanlage, einem Feuchtigkeitsniveau einer Druckluftbehälters oder einer Druckluftaufbereitungspatrone, einer Motordrehzahl, dem Betrag und/oder dem Vorzeichen eines Motordrehmoments, Kupplungs-und/oder Gangdaten, Retarderdaten des Fahrzeugs und einem Abstand zu einem vorausfahrenden anderen Fahrzeug umfassen. Durch die Verwendung der von dem Navigationssystem gelieferten Informationen beziehungsweise Daten in Verbindung mit aktuellen fahrzeugspezifischen Größen, wie Radgeschwindigkeiten und Gierraten, etc., kann die Position des Fahrzeugs bis auf wenige Meter genau errechnet werden. Vorzugsweise werden die aktuellen Parameter ebenso weiteren Verarbeitungseinrichtungen und/oder Steuergeräten beziehungsweise Steuereinrichtungen zur Verfügung gestellt, die nicht mit der Luftaufbereitungssteuerung in Beziehung stehen. Dies erfolgt beispielsweise über einen in dem Fahrzeug vorgesehenen CAN-Bus. Darüber hinaus können durch Fahrerassistenzsysteme (Adaptive Cruise Control = ACC) bereitgestellte Abstandsinformationsdaten zu vorausfahrenden Fahrzeugen zur Beurteilung, ob die Synchronisierung erfolgen soll, verwendet werden.

Weiterhin kann die erfindungsgemäße Vorrichtung derart weitergebildet sein, dass die Verarbeitungseinrichtung geeignet ist, zumindest die Höhenprofildaten und/oder die aktuellen Positionsdaten von einem Navigationssystem zu beziehen. So können die von dem Navigationssystem gelieferten Daten an die Verarbeitungseinrichtung weiterleitet werden. In diesem Zusammenhang kann das Navigationssystem auch momentane vertikale Positionen des Fahrzeugs liefern. Vorzugsweise wird ein GPS (= Global Positioning System / Globales Positionssystem) gestütztes beziehungsweise ein satellitengestütztes Navigationssystem verwendet. Dieses liefert entsprechend Höhenprofildaten, die unter anderem vertikale Positionskoordinaten einer Vielzahl von Streckenpunkten oder von Streckenbereichen entlang der befahrenen oder zu befahrenden Fahrtstrecke enthalten.

Das erfindungsgemäße Verfahren umfasst die Merkmale von Anspruch 13.

Dadurch ergeben sich die im Zusammenhang mit der erfindungsgemäßen Vorrichtung erläuterten Eigenschaften und Vorteile in gleicher oder ähnlicher Weise, weshalb zur Vermeidung von Wiederholungen auf die entsprechenden Ausführungen im Zusammenhang mit der erfindungsgemäßen Vorrichtung verwiesen wird. Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit der erfindungsgemäßen Vorrichtung verwiesen wird.

Das erfindungsgemäße Verfahren kann in vorteilhafter Weise derart weitergebildet sein, dass weiterhin in Abhängigkeit von aktuellen Positionsdaten des Fahrzeugs und/oder aktuellen Fahrzeugparametern das voraussichtliche Auftreten des zumindest einen Schubbetriebs ermittelt wird.

Weiterhin kann das erfindungsgemäße Verfahren so ausgeführt werden, dass die Ermittlung des voraussichtlichen Auftretens des zumindest einen Schubbetriebs für einen dem Fahrzeug vorausliegenden Streckenabschnitt vorgegebener Länge vorgenommen wird.

Darüber hinaus kann das erfindungsgemäße Verfahren derart umgesetzt werden, dass ermittelt wird, ob in dem vorgegebenen Streckenabschnitt ein oder mehrere Schubbetriebe voraussichtlich auftreten können.

Ferner kann das erfindungsgemäße Verfahren so realisiert werden, dass basierend auf den Höhenprofildaten auf zumindest einen Gefälleabschnitt der befahrenen und/oder zu befahrenden Strecke geschlossen wird, bei dem der zumindest eine Schubbetrieb voraussichtlich auftreten kann.

Des Weiteren wird das erfindungsgemäße Verfahren vorzugsweise so verwirklicht, dass basierend auf den Höhenprofildaten und/oder den aktuellen Fahrzeugparametern und/oder den aktuellen Positionsdaten eine Zeitdauer des voraussichtlich auftretenden Schubbetriebs ermittelt wird.

Das erfindungsgemäße Verfahren kann in vorteilhafter Weise auch so weitegebildet werden, dass bei Vorliegen eines momentanen Schubbetriebs basierend auf den Höhenprofildaten und/oder den aktuellen Fahrzeugparametern und/oder den aktuellen Positionsdaten eine verbleibende Dauer des momentanen Schubbetriebs ermittelt wird.

Weiterhin kann das erfindungsgemäße Verfahren derart ausgebildet werden, dass die Höhenprofildaten der durch das Fahrzeug zu befahrenden Strecke auf vorausberechneten Höhenprofildaten einer Gesamtstrecke beruhen, die durch eine Startposition und ein vorbestimmtes Fahrtziel des Fahrzeugs vorbestimmt ist.

Ferner wird das erfindungsgemäße Verfahren so verwirklicht, dass ein Betrieb zumindest einer Fahrzeugkomponente in Abhängigkeit von dem ermittelten zumindest einen voraussichtlich auftretenden Schubbetrieb des Fahrzeugs gesteuert wird.

Das Verfahren wird so umgesetzt, dass die zumindest eine Fahrzeugkomponente eine Luftaufbereitungsanlage ist.

In diesem Zusammenhang ist es besonders vorteilhaft, das erfindungsgemäße Verfahren so zu gestalten, dass die Luftaufbereitungsanlage derart gesteuert wird, dass sie bei Vorliegen des ermittelten voraussichtlich auftretenden Schubbetriebs ein Luftaufbereitungsbetrieb synchron durchführt.

Vorzugsweise wird das erfindungsgemäße Verfahren so weitergebildet, dass die Luftaufbereitungsanlage derart gesteuert wird, dass die Durchführung der Synchronisierung des Luftaufbereitungsbetriebs mit dem Schubbetrieb zumindest auf dem Vorliegen des zumindest einen Gefälleabschnitts basiert.

In diesem Zusammenhang ist es besonders vorteilhaft, das erfindungsgemäße Verfahren so weiterzubilden, dass basierend auf Abstandsdaten des Fahrzeugs zu einem vorausfahrenden weiteren Fahrzeug beurteilt wird, ob der Luftaufbereitungsbetrieb ausgeführt wird.

Weiterhin kann vorgesehen sein, das Verfahren so auszuführen, dass die Luftaufbereitungsanlage derart gesteuert wird, dass der Luftaufbereitungsbetrieb durch Betreiben eines mit einem Antriebsstrang gekoppelten Kompressors durchgeführt wird, wobei die Luftaufbereitungsanlage weiterhin derart gesteuert wird, dass der Luftaufbereitungsbetrieb beendet wird, wenn der Kompressor in einem Leerlauf betrieben wird und/oder von dem Antriebsstrang entkoppelt ist.

Ferner wird das erfindungsgemäße Verfahren derart ausgestaltet, dass die Luftaufbereitungsanlage derart gesteuert wird, dass der Luftaufbereitungsbetrieb bei nicht vorliegendem Schubbetrieb des Fahrzeugs auch dann durchgeführt wird, wenn die Luftaufbereitung des Fahrzeugs zwingend erforderlich ist.

Des Weiteren kann das erfindungsgemäße Verfahren so realisiert werden, dass die aktuellen Fahrzeugparameter zumindest ein Element aus Positions- oder Höhendaten des Fahrzeugs, der Fahrzeuggeschwindigkeit, Radgeschwindigkeiten und/oder Gierraten, einer Fahrzeugbeschleunigung, einem Druckluftniveaus einer Bremsanlage, einem Feuchtigkeitsniveau einer Druckluftbehälters oder einer Druckluftaufbereitungspatrone, einer Motordrehzahl, dem Betrag und/oder dem Vorzeichen eines Motordrehmoments, Kupplungs- und/oder Gangdaten, Retarderdaten des Fahrzeugs und einem Abstand zu einem vorausfahrenden anderen Fahrzeug umfassen.

Weiterhin ist es vorteilhaft, das erfindungsgemäße Verfahren so auszubilden, dass zumindest die Höhenprofildaten und/oder die aktuellen Positionsdaten von einem Navigationssystem bezogen werden.

Die Verwendung des Navigationssystems ist vorgesehen, um in Abhängigkeit der Höhenprofildaten eine Ermittlung eines voraussichtlichen Auftretens zumindest eines Schubbetriebs des Fahrzeugs zu ermöglichen. Auch in diesem Fall ergeben sich die im Zusammenhang mit der erfindungsgemäßen Vorrichtung erläuterten Eigenschaften und Vorteile in gleicher oder ähnlicher Weise, weshalb zur Vermeidung von Wiederholungen ebenso auf die entsprechenden Ausführungen im Zusammenhang mit der erfindungsgemäßen Vorrichtung verwiesen wird.

Bevorzugte Ausführungsbeispiele der Erfindung werden nachstehend anhand der Figuren beispielhaft erläutert.

Es zeigen:
- Figur 1: eine schematische Darstellung einer erfindungsgemäßen Vorrichtung zur Ermittlung eines Schubbetriebs eines Fahrzeugs, die zur Durchführung des erfindungsgemäßen Verfahrens geeignet ist;
- Figur 2: ein Flussdiagramm eines erfindungsgemäßen Verfahrens zur Ermittlung eines voraussichtlich auftretenden Schubbetriebs in Zusammenhang mit einer Luftaufbereitungsanlage gemäß einem ersten Ausführungsbeispiel der Erfindung; und
- Figur 3: ein Flussdiagramm des erfindungsgemäßen Verfahrens zur Ermittlung eines voraussichtlich auftretenden Schubbetriebs im Zusammenhang mit der Luftaufbereitungsanlage gemäß einem zweiten Ausführungsbeispiel der Erfindung.

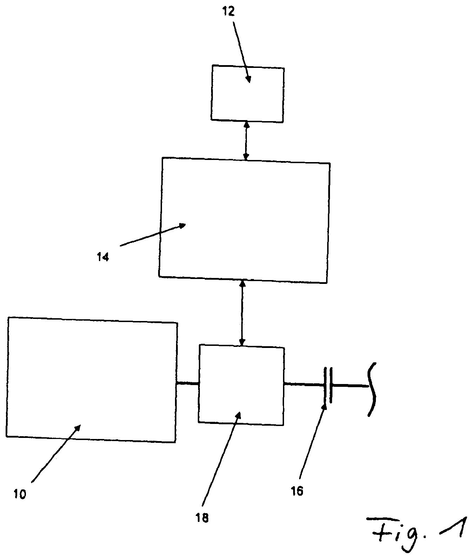

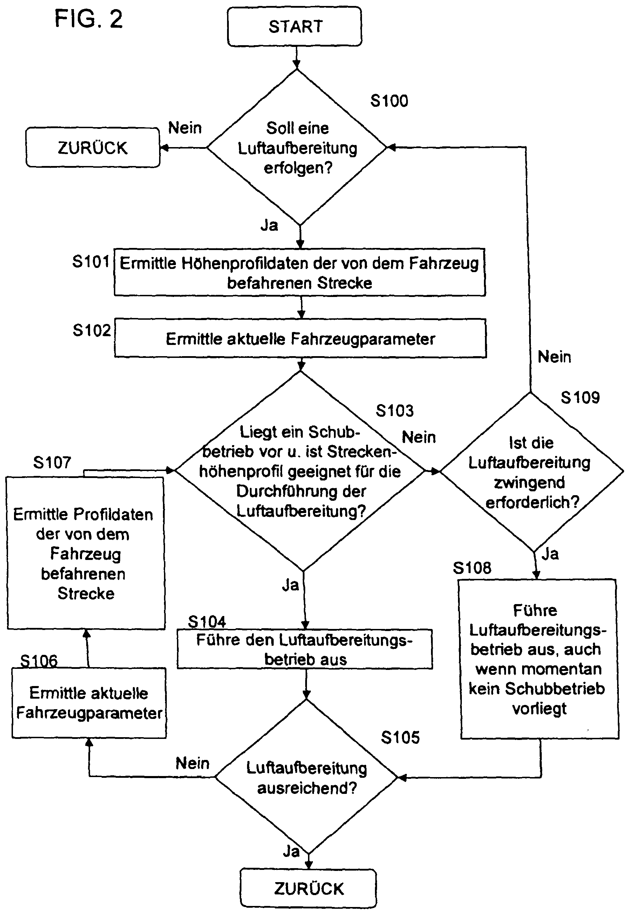

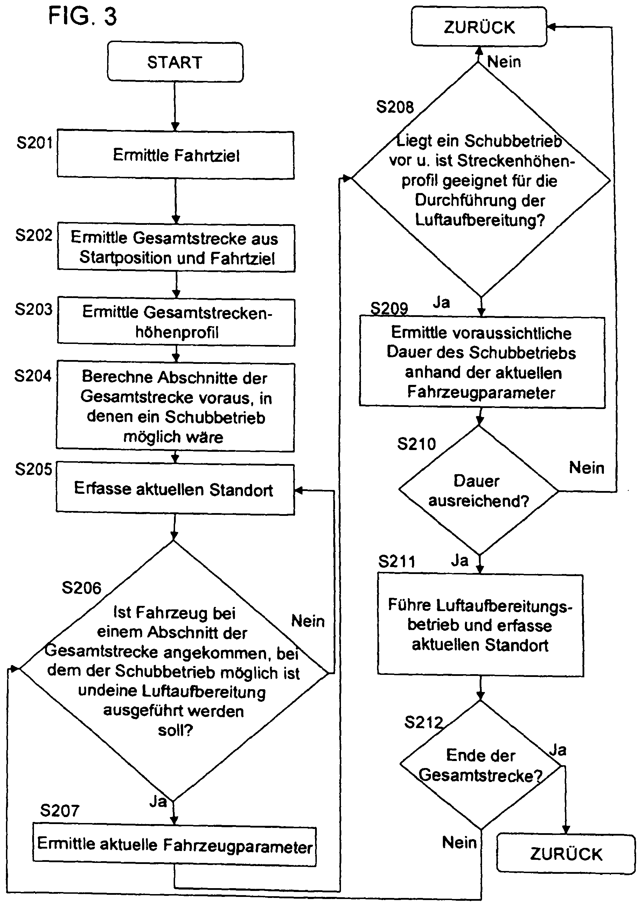

Figur 1 zeigt eine schematische Darstellung einer erfindungsgemäßen Vorrichtung zum Ermitteln eines Schubbetriebs eines Fahrzeugs, die zur Durchführung des erfindungsgemäßen Verfahrens geeignet ist. Bevor das erfindungsgemäße Verfahren anhand der Figuren 2 und 3 erläutert wird, wird zunächst näher auf den Aufbau der erfindungsgemäßen Vorrichtung zum Ermitteln zumindest eines voraussichtlich auftretenden Schubbetriebs eines Fahrzeugs eingegangen. Dabei wird die erfindungsgemäße Vorrichtung in diesem Fall im Zusammenhang mit einer Luftaufbereitungsanlage 10 eines Fahrzeugs beschrieben, wobei ebenso andere Fahrzeugkomponenten anstelle oder parallel zur Luftaufbereitungsanlage 10 im Zusammenhang mit der erfindungsgemäßen Vorrichtung verwendet werden können. Im dargestellten Fall umfasst die erfindungsgemäße Vorrichtung eine Luftaufbereitungsanlage 10, die mit einem nicht näher interessierenden Kompressor 18 pneumatisch gekoppelt ist, wobei der Kompressor 18 zur Luftaufbereitung betreibbar ist. Der Kompressor 18 wird über einen nur teilweise dargestellten Antriebsstrang 16 angetrieben, wobei eine Momentenübertragung zu dem Kompressor 18 über den Antriebsstrang 16 beispielsweise durch eine Kupplung unterbrochen werden kann. Vorzugsweise stammt der Antriebsstrang 16 von einem nicht gezeigten und nicht näher interessierenden Verbrennungsmotor des Fahrzeugs. Der Antriebsstrang 16 kann insbesondere als ein für den Kompressor 18 separater Antriebstrang vorgesehen oder von einem mit einem Getriebe gekoppelten Hauptantriebsstrang des Verbrennungsmotors abgezweigt sein. Der Kompressor 18 wird zur Variation des Luftaufbereitungsbetriebs von einer Verarbeitungseinrichtung beziehungsweise einer Steuereinrichtung 14 oder einem Controller 14 angesteuert. Vorzugsweise dient die Steuereinrichtung 14 ebenso zur Unterbrechung der Momentenübertragung zu dem Kompressor 16 durch Ansteuerung der Kupplung. Die Steuereinrichtung 14 ist in diesem Fall eine dem Fachmann bekannte Steuereinrichtung, die Berechnung-, Verarbeitungs- Steuerungs- und Regelungsfunktionen ausführen kann. Die Steuereinrichtung 14 bezieht unter anderem über eine zum Datenaustausch geeignete Verbindung Daten- beziehungsweise Informationen von einem Navigationssystem 12. Das Navigationssystem 12 ist in diesem Fall ein herkömmliches Navigationssystem 12, das dazu geeignet ist, neben mit Positionsangaben des Fahrzeugs korrelierende Daten auch mit Höhenangaben korrelierende Daten an die Steuereinrichtung 14 zu übermitteln. Insbesondere ist das Navigationssystem 12 dazu geeignet, der Steuereinrichtung 14 mit Streckenhöhenprofilen korrelierende Daten zu liefern, aus denen sich Gefälle und Steigungen der entsprechenden durch das Fahrzeug befahrenen oder zu befahrenden Strecken berechnen lassen.

Figur 2 zeigt ein Flussdiagramm eines erfindungsgemäßen Verfahrens zum Ermitteln eines voraussichtlich auftretenden Schubbetriebs in Zusammenhang mit der Luftaufbereitungsanlage 10 von Figur 1 gemäß einem ersten Ausführungsbeispiel der Erfindung. Die folgenden Schritte werden in diesem Ausführungsbeispiel gänzlich von der Verarbeitungseinrichtung beziehungsweise der Steuereinrichtung 14 durchgeführt. In diesem Zusammenhang sei angemerkt, dass die Steuerung auch von unterschiedlichen Verarbeitungs- oder Steuereinrichtungen, die miteinander in Kommunikation stehen und entsprechend Daten austauschen, ausgeführt werden kann. Zu Beginn des erfindungsgemäßen Verfahrens erfolgt in Schritt S100 eine Abfrage, ob eine Luftaufbereitung beziehungsweise Druckluftförderung mittels eines Luftaufbereitungsbetriebs erfolgen soll. Die Abfrage von Schritt S100 ist beispielsweise an Bedingungen über die in einzelnen mit der Luftaufbereitungsanlage 10 gekoppelten Druckluftkreisen herrschenden Druckluftverhältnisse geknüpft. Unter anderem kann eine Bedingung der Druckluftzustand eines einem Druckluftkreis zugeordneten Druckluftbehälters sein. Die mit der Luftaufbereitungsanlage gekoppelten Druckluftkreise können insbesondere Bremskreise, Nebenverbraucherkreise, ein Anhängerversorgungskreis, ein Feststellbremskreis, ein Luftfederungskreis etc. sein. Wird festgestellt, dass keine Druckluftaufbereitung erfolgen soll, beispielsweise ist ein Druckluftniveau der entsprechenden Druckluftkreise ausreichend, so endet das Verfahren an dieser Stelle und beginnt wieder von vorne. Wird beurteilt, dass eine Druckluftaufbereitung erfolgen soll, beispielsweise ist das Druckluftniveau zumindest eines Druckluftspeichers unter einem vorbestimmten Grenzwert, so schreitet das Verfahren zu Schritt S101 voran. Bei Schritt S101 bezieht die Steuereinrichtung 14 Höhenprofildaten einer von dem Fahrzeug befahrenen und zu befahrenden Strecke. Da in diesem Ausführungsbeispiel dem Navigationssystem 12 kein Fahrtziel vorgegeben wurde, übermittelt das Navigationssystem 12 der Steuereinrichtung 14 aktuelle oder bis zu einem vorbestimmten Ausmaß vorausberechnete Höhenprofildaten der vor dem Fahrzeug liegenden Strecke. In diesem Fall umfassen die Höhenprofildaten der vom dem Fahrzeug befahrenen Strecke die Streckenprofildaten von der aktuellen Position des Fahrzeugs bis zu einer vorbestimmten Position. Vorzugsweise wird die vor dem Fahrzeug liegende Strecke durch die Länge der Straße vorgegeben, in der sich das Fahrzeug zum aktuellen Zeitpunkt befindet. Die vorbestimmte Position ist frei festlegbar und kann beliebig zwischen der aktuellen Position des Fahrzeugs und dem Ende der Straße vorbestimmt sein. Aus den Höhenprofildaten der von dem Fahrzeug befahrenen Strecke berechnet die Steuereinrichtung 14 dann Steigungen und Gefälle an der aktuellen Position des Fahrzeugs und/oder des Streckenverlaufs bis zur vorbestimmten Position. Als nächstes werden in Schritt S102 aktuelle Fahrzeugparameter ermittelt. Die aktuellen Fahrzeugparameter umfassen unter Anderem zumindest ein Element aus von dem Navigationssystem 12 bezogene Positions- und Höhendaten des Fahrzeugs, von einem Fahrerassistenzsystem bezogene Abstandsdaten zu einem bezüglich des Fahrzeugs vorausfahrenden weiteren Fahrzeug, eine Fahrzeuggeschwindigkeit, insbesondere Radgeschwindigkeiten und/oder Gierraten, eine Fahrzeugbeschleunigung, das aktuelle Druckluftniveau der Bremsanlage, ein Feuchtigkeitsniveau einer Druckluftpatrone der Bremsanlage, eine Motordrehzahl, ein Motormoment sowie dessen Vorzeichen, Kupplungs- und/oder Gangdaten des Fahrzeugs und Retarderdaten des Fahrzeugs etc. Nach der Ermittlung der aktuellen Fahrzeugparameter in Schritt S102 schreitet das Verfahren zu Schritt S103 voran. In Schritt S103 erfolgt zum einen eine Abfrage, ob ein Schubbetrieb des Fahrzeugs vorliegt. Die Ermittlung des Schubbetriebs des Fahrzeugs erfolgt in diesem Ausführungsbeispiel zumindest teilweise in Abhängigkeit von einem oder mehreren der aktuellen Fahrzeugparameter und kann zusätzlich auch in Abhängigkeit von den Höhenprofildaten der befahrenen Strecke erfolgen. Zum anderen wird abgefragt, ob die ermittelten Höhenprofildaten der Strecke dafür geeignet sind, einen Luftaufbereitungsbetrieb durchzuführen. Insbesondere bei Vorliegen eines Gefälles der Strecke wird beurteilt, dass die Durchführung des Luftaufbereitungsbetriebs vorgenommen werden kann. Werden die Höhenprofildaten von der aktuellen Position bis zu der vorbestimmten Position vorausberechnet, so kann die Beurteilung auch unter Berücksichtigung der vor dem Fahrzeug liegenden Strecke erfolgen, beispielsweise anhand der Länge des Gefälles. Ist die Länge des Gefälles groß genug, so wird die Durchführung des Luftaufbereitungsbetriebs besonders begünstigt. Wird in Schritt S103 festgelegt, dass ein Schubbetrieb des Fahrzeugs vorliegt und das Streckenhöhenprofil für die Durchführung des Luftaufbereitungsbetriebs geeignet ist, schreitet das Verfahren zu Schritt S104 voran, in dem der Luftaufbereitungsbetrieb ausgeführt wird. Insbesondere wird in diesem Fall der Kompressor 18 zur Druckluftförderung beziehungsweise Druckluftbeschaffung zu den entsprechenden Druckluftkreisen betrieben. Anschließend wird in Schritt S105 beurteilt, ob die Luftaufbereitung von Schritt S104 ausreichend war. Beispielsweise erfolgt diese Beurteilung anhand einer Überprüfung des Druckluftniveaus der Luftbehälter der entsprechenden Druckluftkreise. War die Luftaufbereitung ausreichend, so endet das Verfahren und beginnt wieder von vorne. Wird jedoch beurteilt, dass die Luftaufbereitung nicht ausreichend war, so werden in den Schritten S106 und S107 erneut die aktuellen Fahrzeugparameter und die Höhenprofildaten der befahrenen Strecke analog zu den Schritten S101 und S102 ermittelt. Dies rührt daher, dass sich inzwischen Änderungen der entsprechenden Daten ergeben haben könnten, da sich die Position des Fahrzeugs inzwischen geändert haben kann. Anschließend erfolgt wieder die vorgenannte Abfrage in Schritt S103. Wird in Schritt S103 entschieden, dass kein Schubbetrieb des Fahrzeugs vorliegt oder das Streckenhöhenprofil für die Durchführung des Luftaufbereitungsbetriebs ungeeignet ist, so schreitet das Verfahren zu Schritt S109 voran. Dort erfolgt eine weitere Abfrage, ob die Luftaufbereitung zwingend erforderlich ist. Dies kann beispielsweise dann der Fall sein, wenn zumindest ein Druckluftniveau eines Druckluftbehälters eines entsprechenden Druckluftkreises unter ein kritisches Niveau gesunken ist. Ist dies der Fall, so wird auch dann, wenn momentan kein Schubbetrieb des Fahrzeugs vorliegt oder aufgrund eines ungeeigneten Streckenhöhenprofils, der Luftaufbereitungsbetrieb ausgeführt. Anschließend erfolgt erneut die vorstehend erläuterte Abfrage des Schritts S105. Wird in Schritt S109 jedoch festgelegt, das eine Luftaufbereitung nicht zwingend erforderlich ist, beispielsweise ist das Druckluftniveau über dem kritischen Niveau, so kehrt das Verfahren zu dem vorstehend beschriebenen Schritt S100 zurück.

Figur 3 zeigt ein Flussdiagramm des erfindungsgemäßen Verfahrens zum Ermitteln eines voraussichtlich auftretenden Schubbetriebs im Zusammenhang mit der Luftaufbereitungsanlage 10 von Figur 1 gemäß einem zweiten Ausführungsbeispiel der Erfindung. Das erfindungsgemäße Verfahren beginnt in diesem Ausführungsbeispiel bei Schritt S201 mit der Ermittlung eines Fahrtziels, das in das Navigationssystem 12 eingegeben wurde und der Steuereinrichtung 14 übermittelt wird. Weiterhin bezieht die Steuereinrichtung 14 in Schritt S202 die von dem Fahrzeug befahrene und zurückzulegende Gesamtstrecke von dem Navigationssystem 12, die sich aus jeweils der aktuellen Startposition und dem Fahrtziel des Fahrzeugs ergibt.

Ebenso übermittelt das Navigationssystem 12 bei Schritt S203 ein Gesamtstreckenhöhenprofil der zurückzulegenden Gesamtstrecke an die Steuereinrichtung 14. Daraus berechnet die Steuereinrichtung 14 anschließend in Schritt S204 Abschnitte der Gesamtstrecke voraus, in denen ein Schubbetrieb des Fahrzeugs auftreten könnte und die für die Durchführung eines Luftaufbereitungsbetriebs geeignet wären. In Schritt S205 wird der aktuelle Standort des Fahrzeugs bezogen. Anschließend erfolgt in Schritt S206 eine Abfrage, ob das Fahrzeug bei einem berechneten Abschnitt, bei dem ein Schubbetrieb möglich wäre, angekommen ist, und ob eine Luftaufbereitung ausgeführt werden soll. Dabei hängt die Abfrage der Ausführung der Luftaufbereitung von den gleichen Kriterien ab, wie bei Schritt S100 von Figur 2. Wenn das Fahrzeug nicht bei dem vorausberechneten Abschnitt angekommen ist oder keine Luftaufbereitung ausgeführt werden soll, kehrt das Verfahren zu Schritt S205 solange zurück, bis beide in Schritt S206 abgefragten Bedingungen erfüllt sind. Es wird angemerkt, dass in diesem Fall auf eine Abfrage gemäß den Schritten S109 und S108 der Einfachheit halber verzichtet wurde. Jedoch wird in jedem Fall ein Luftaufbereitungsbetrieb ausgeführt, falls dies zwingend erforderlich ist, wie vorstehend im Zusammenhang mit den Schritten S109 und S108 beschrieben ist. Sind die Bedingungen der Abfrage von Schritt S206 erfüllt, so schreitet das Verfahren zu Schritt S207 voran, in dem die aktuellen Fahrzeugparameter analog zu Schritt S102 von Figur 2 ermittelt werden. Anschließend wird der Schritt S208 ausgeführt, in dem in gleicher Weise wie in Schritt S103 von Figur 2 abgefragt wird, ob ein Schubbetrieb vorliegt und vorzugsweise ein weiteres mal verifiziert wird, ob das Streckenhöhenprofil für die Durchführung des Luftaufbereitungsbetriebs geeignet ist. Ist dies nicht der Fall, so endet das Verfahren und beginnt gegebenenfalls von vorne. Wird in Schritt S208 festgelegt, dass der Schubbetrieb des Fahrzeugs und entsprechende Eignung des Streckenhöhenprofils vorliegen, so schreitet das Verfahren zu Schritt S209 voran. Dort wird eine voraussichtliche Dauer des Schubbetriebs anhand der aktuellen Fahrzeugparameter ermittelt. Insbesondere wird die Dauer des Schubbetriebs zumindest aus der Fahrzeuggeschwindigkeit und dem dem Fahrzeug vorausliegendem Streckenabschnitt ermittelt. Als nächstes wird der Schritt S210 ausgeführt, in dem abgefragt wird, ob die Dauer ausreichend für das Ausführen des Luftaufbereitungsbetriebs ist. Insbesondere wird die berechnete voraussichtliche Dauer mit einem vorbestimmten Grenzwert verglichen, der eine Mindestdauer des Schubbetriebs angibt und beliebig festlegbar ist. Ist die voraussichtliche Dauer nicht ausreichend, so endet das Verfahren und beginnt gegebenenfalls von vorne. Ist die Dauer ausreichend, so wird in Schritt S211 der Luftaufbereitungsbetrieb ausgeführt und anschließend der aktuelle Standort des Fahrzeugs ermittelt. Alternativ oder zusätzlich kann bei Schritt S210 ebenso der Abstand zu einem vorausfahrenden Fahrzeug überprüft werden und analog zu der Beurteilung der voraussichtlichen Dauer des Schubbetrieb anhand der Abstanddaten beurteilt werden, ob eine Luftaufbereitung durchgeführt werden soll. Anschließend wird in Schritt S212 abgefragt, ob das Ende der Gesamtstrecke, das heißt das Fahrtziel, erreicht wurde. Ist dies nicht der Fall, so kehrt das Verfahren zu dem Schritt S206 zurück und verbleibt in der Abfrageschleife S206 und S205, bis der nächste vorausberechnete Abschnitt erreicht wird, bei dem ein Schubbetrieb möglich wäre. Wird bei Schritt S212 festgestellt, dass das Ende der Gesamtstrecke erreicht wurde, so endet das Verfahren und beginnt gegebenenfalls erneut von vorne.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Luftaufbereitungsanlage
- 12: Navigationssystem
- 14: Steuereinrichtung
- 16: Antriebsstrang
- 18: Kompressor

## Patentansprüche

1. Vorrichtung zum Ermitteln eines Schubbetriebs eines Fahrzeugs, insbesondere eines Nutzfahrzeugs, mit einer Verarbeitungseinrichtung (14), die zur Ermittlung des Schubbetriebs dient, wobei die Verarbeitungseinrichtung (14) geeignet ist, zumindest in Abhängigkeit von Höhenprofildaten einer von dem Fahrzeug befahrenen und/oder zu befahrenden Strecke ein voraussichtliches Auftreten zumindest eines Schubbetriebs zu ermitteln,
- wobei die Verarbeitungseinrichtung (14) geeignet ist, die Ermittlung des voraussichtlichen Auftretens des zumindest einen Schubbetriebs für einen dem Fahrzeug vorausliegenden Streckenabschnitt vorgegebener Länge vorzunehmen,
- wobei die Verarbeitungseinrichtung (14) geeignet ist, einen Betrieb zumindest einer Fahrzeugkomponente in Abhängigkeit von dem ermittelten zumindest einen voraussichtlich auftretenden Schubbetrieb des Fahrzeugs zu steuern,
- wobei die zumindest eine Fahrzeugkomponente eine Luftaufbereitungsanlage ist,
- wobei die Verarbeitungseinrichtung (14) geeignet ist, die Luftaufbereitungsanlage (10) derart zu steuern, dass sie bei Vorliegen des ermittelten voraussichtlich auftretenden Schubbetriebs ein Luftaufbereitungsbetrieb synchron durchführt und
- wobei die Verarbeitungseinrichtung (14) geeignet ist, die Luftaufbereitungsanlage (10) derart zu steuern, dass der Luftaufbereitungsbetrieb bei nicht vorliegendem Schubbetrieb des Fahrzeugs auch dann durchgeführt wird, wenn die Luftaufbereitung des Fahrzeugs zwingend erforderlich ist.

2. Vorrichtung nach Anspruch 1, **dadurch gekennzeichnet, dass** die Verarbeitungseinrichtung (14) geeignet ist, weiterhin in Abhängigkeit von aktuellen Positionsdaten des Fahrzeugs und/oder aktuellen Fahrzeugparametern das voraussichtliche Auftreten des zumindest einen Schubbetriebs zu ermitteln.

3. Vorrichtung nach Anspruch 1, **dadurch gekennzeichnet, dass** die Verarbeitungseinrichtung (14) geeignet ist, zu ermitteln, ob in dem vorgegebenen Streckenabschnitt ein oder mehrere Schubbetriebe voraussichtlich auftreten können.

4. Vorrichtung nach einem der Ansprüche 1 bis 3, **dadurch gekennzeichnet, dass** die Verarbeitungseinrichtung (14) geeignet ist, basierend auf den Höhenprofildaten auf zumindest einen Gefälleabschnitt der befahrenen und/oder zu befahrenden Strecke zu schließen, bei dem der zumindest eine Schubbetrieb voraussichtlich auftreten kann.

5. Vorrichtung nach einem der Ansprüche 2 bis 4, **dadurch gekennzeichnet, dass** die Verarbeitungseinrichtung (14) geeignet ist, basierend auf den Höhenprofildaten und/oder den aktuellen Fahrzeugparametern und/oder den aktuellen Positionsdaten eine Zeitdauer des voraussichtlich auftretenden Schubbetriebs zu ermitteln.

6. Vorrichtung nach einem der Ansprüche 2 bis 5, **dadurch gekennzeichnet, dass** die Verarbeitungseinrichtung (14) geeignet ist, bei Vorliegen eines momentanen Schubbetriebs basierend auf den Höhenprofildaten und/oder den aktuellen Fahrzeugparametern und/oder den aktuellen Positionsdaten eine verbleibende Dauer des momentanen Schubbetriebs zu ermitteln.

7. Vorrichtung nach einem der Ansprüche 1 bis 6, **dadurch gekennzeichnet, dass** die Höhenprofildaten der durch das Fahrzeug zu befahrenden Strecke auf vorausberechneten Höhenprofildaten einer Gesamtstrecke beruhen, die durch eine Startposition und ein vorbestimmtes Fahrtziel des Fahrzeugs vorbestimmt ist.

8. Vorrichtung nach einem der Ansprüche 1 bis 7, **dadurch gekennzeichnet, dass** die Verarbeitungseinrichtung (14) geeignet ist, die Luftaufbereitungsanlage (10) derart zu steuern, dass die Durchführung der Synchronisierung des Luftaufbereitungsbetriebs mit dem Schubbetrieb zumindest auf dem Vorliegen des zumindest einen Gefälleabschnitts basiert.

9. Vorrichtung nach einem der Ansprüche 1 bis 8, **dadurch gekennzeichnet, dass** die Verarbeitungseinrichtung (14) geeignet ist, basierend auf Abstandsdaten des Fahrzeugs zu einem vorausfahrenden weiteren Fahrzeug zu beurteilen, ob der Luftaufbereitungsbetrieb ausgeführt wird.

10. Vorrichtung nach einem der Ansprüche 1 bis 9, **dadurch gekennzeichnet, dass** die Verarbeitungseinrichtung (14) geeignet ist, die Luftaufbereitungsanlage (10) derart zu steuern, dass der Luftaufbereitungsbetrieb durch Betreiben eines mit einem Antriebsstrang (16) gekoppelten Kompressors (18) durchgeführt wird, wobei die Verarbeitungseinrichtung (14) geeignet ist, die Luftaufbereitungsanlage (10) weiterhin derart zu steuern, dass der Luftaufbereitungsbetrieb beendet wird, wenn der Kompressor (18) in einem Leerlauf betrieben wird und/oder von dem Antriebsstrang (16) entkoppelt ist.

11. Vorrichtung nach einem der Ansprüche 2 bis 10, **dadurch gekennzeichnet, dass** die aktuellen Fahrzeugparameter zumindest ein Element aus Positions- oder Höhendaten des Fahrzeugs, der Fahrzeuggeschwindigkeit, Radgeschwindigkeiten und/oder Gierraten, einer Fahrzeugbeschleunigung, einem Druckluftniveaus einer Bremsanlage, einem Feuchtigkeitsniveau einer Druckluftbehälters oder einer Druckluftaufbereitungspatrone, einer Motordrehzahl, dem Betrag und/oder dem Vorzeichen eines Motordrehmoments, Kupplungs- und/oder Gangdaten, Retarderdaten des Fahrzeugs und einem Abstand zu einem vorausfahrenden anderen Fahrzeug umfassen.

12. Vorrichtung nach einem der Ansprüche 1 bis 11, **dadurch gekennzeichnet, dass** die Verarbeitungseinrichtung geeignet ist, zumindest die Höhenprofildaten und/oder die aktuellen Positionsdaten von einem Navigationssystem (12) zu beziehen.

13. Verfahren zum Ermitteln eines Schubbetriebs eines Fahrzeugs, insbesondere eines Nutzfahrzeugs,
- wobei zumindest in Abhängigkeit von Höhenprofildaten einer von dem Fahrzeug befahrenen und/oder zu befahrenden Strecke ein voraussichtliches Auftreten zumindest eines Schubbetriebs ermittelt wird (S101-S103; S201-S208),
- wobei die Ermittlung des voraussichtlichen Auftretens des zumindest einen Schubbetriebs für einen dem Fahrzeug vorausliegenden Streckenabschnitt vorgegebener Länge vorgenommen wird,
- wobei ein Betrieb zumindest einer Fahrzeugkomponente in Abhängigkeit von dem ermittelten zumindest einen voraussichtlich auftretenden Schubbetrieb des Fahrzeugs gesteuert wird,
- wobei die zumindest eine Fahrzeugkomponente eine Luftaufbereitungsanlage ist,
- wobei die Luftaufbereitungsanlage (10) derart gesteuert wird, dass sie bei Vorliegen des ermittelten voraussichtlich auftretenden Schubbetriebs ein Luftaufbereitungsbetrieb synchron durchführt (S104; S211),
- wobei die Luftaufbereitungsanlage (10) derart gesteuert wird, dass die Durchführung der Synchronisierung des Luftaufbereitungsbetriebs mit dem Schubbetrieb zumindest auf dem Vorliegen des zumindest einen Gefälleabschnitts basiert,
- wobei die Luftaufbereitungsanlage (10) derart gesteuert wird, dass der Luftaufbereitungsbetrieb bei nicht vorliegendem Schubbetrieb des Fahrzeugs auch dann durchgeführt wird, wenn die Luftaufbereitung des Fahrzeugs zwingend erforderlich ist (S108).

14. Verfahren nach Anspruch 13, **dadurch gekennzeichnet, dass** weiterhin in Abhängigkeit von aktuellen Positionsdaten des Fahrzeugs und/oder aktuellen Fahrzeugparametern das voraussichtliche Auftreten des zumindest einen Schubbetriebs ermittelt wird (S102; S205, S207).

15. Verfahren nach Anspruch 13, **dadurch gekennzeichnet, dass** ermittelt wird, ob in dem vorgegebenen Streckenabschnitt ein oder mehrere Schubbetriebe voraussichtlich auftreten können.

16. Verfahren nach einem der Ansprüche 13 bis 15, **dadurch gekennzeichnet, dass** basierend auf den Höhenprofildaten auf zumindest einen Gefälleabschnitt der befahrenen und/oder zu befahrenden Strecke geschlossen wird, bei dem der zumindest eine Schubbetrieb voraussichtlich auftreten kann.

17. Verfahren nach einem der Ansprüche 13 bis 16, **dadurch gekennzeichnet, dass** basierend auf den Höhenprofildaten und/oder den aktuellen Fahrzeugparametern und/oder den aktuellen Positionsdaten eine Zeitdauer des voraussichtlich auftretenden Schubbetriebs ermittelt wird (S209).

18. Verfahren nach einem der Ansprüche 13 bis 17, **dadurch gekennzeichnet, dass** bei Vorliegen eines momentanen Schubbetriebs basierend auf den Höhenprofildaten und/oder den aktuellen Fahrzeugparametern und/oder den aktuellen Positionsdaten eine verbleibende Dauer des momentanen Schubbetriebs ermittelt wird.

19. Verfahren nach einem der Ansprüche 13 bis 18, **dadurch gekennzeichnet, dass** die Höhenprofildaten der durch das Fahrzeug zu befahrenden Strecke auf vorausberechneten Höhenprofildaten einer Gesamtstrecke beruhen, die durch eine Startposition und ein vorbestimmtes Fahrtziel des Fahrzeugs vorbestimmt ist (S203).

20. Verfahren nach einem der Ansprüche 13 bis 19, **dadurch gekennzeichnet, dass** basierend auf Abstandsdaten des Fahrzeugs zu einem vorausfahrenden weiteren Fahrzeug beurteilt wird, ob der Luftaufbereitungsbetrieb ausgeführt wird.

21. Verfahren nach einem der Ansprüche 13 bis 20, **dadurch gekennzeichnet, dass** die Luftaufbereitungsanlage (10) derart gesteuert wird, dass der Luftaufbereitungsbetrieb durch Betreiben eines mit einem Antriebsstrang (16) gekoppelten Kompressors (18) durchgeführt wird, wobei die Luftaufbereitungsanlage (10) weiterhin derart gesteuert wird, dass der Luftaufbereitungsbetrieb beendet wird, wenn der Kompressor (18) in einem Leerlauf betrieben wird und/oder von dem Antriebsstrang (16) entkoppelt ist.

22. Verfahren nach einem der Ansprüche 13 bis 21, **dadurch gekennzeichnet, dass** die aktuellen Fahrzeugparameter zumindest ein Element aus Positions- oder Höhendaten des Fahrzeugs, der Fahrzeuggeschwindigkeit, Radgeschwindigkeiten und/oder Gierraten, einer Fahrzeugbeschleunigung, einem Druckluftniveaus einer Bremsanlage, einem Feuchtigkeitsniveau einer Druckluftbehälters oder einer Druckluftaufbereitungspatrone, einer Motordrehzahl, dem Betrag und/oder dem Vorzeichen eines Motordrehmoments, Kupplungs- und/oder Gangdaten, Retarderdaten des Fahrzeugs und einem Abstand zu einem vorausfahrenden anderen Fahrzeug umfassen.

23. Verfahren nach einem der Ansprüche 13 bis 22, **dadurch gekennzeichnet, dass** zumindest die Höhenprofildaten und/oder die aktuellen Positionsdaten von einem Navigationssystem (12) bezogen werden.

## Claims

1. Device for determining overrun conditions of a vehicle, in particular of a utility vehicle, having a processing device (14) which serves to determine the overrun conditions, wherein the processing device (14) is suitable for determining an expected occurrence of at least one case of overrun conditions at least as a function of altitude profile data of a section of road which is being travelled on and/or is to be travelled on by the vehicle,
- wherein the processing device (14) is suitable for determining the expected occurrence of the at least one case of overrun conditions for a part of a section of road which lies ahead of the vehicle and has a predefined length,
- wherein the processing device (14) is suitable for controlling an operating mode of at least one vehicle component as a function of the at least one case of overrun conditions of the vehicle which is determined and which is expected to occur,
- wherein the at least one vehicle component is an air conditioning system,
- wherein the processing device (14) is suitable for controlling the air conditioning system (10) in such a way that, when the case of overrun conditions which is determined and which is expected to occur occurs, the air conditioning system (10) synchronously carries out an air conditioning operation and
- wherein the processing device (14) is suitable for controlling the air conditioning system (10) in such a way that, when overrun conditions of the vehicle are not occurring, the air conditioning operation is also carried out when the air conditioning of the vehicle is absolutely necessary.

2. Device according to Claim 1, **characterized in that** the processing device (14) is also suitable for determining the expected occurrence of the at least one case of overrun conditions as a function of current position data of the vehicle and/or current vehicle parameters.

3. Device according to Claim 1, **characterized in that** the processing device (14) is suitable for determining whether one or more cases of overrun conditions can be expected to occur in the predefined part of a section of road.

4. Device according to one of Claims 1 to 3, **characterized in that** the processing device (14) is suitable for inferring, on the basis of the altitude profile data, at least one negative-gradient part, at which the at least one case of overrun conditions can be expected to occur, of the section of road which is being travelled on and/or is to be travelled on.

5. Device according to one of Claims 2 to 4, **characterized in that** the processing device (14) is suitable for determining, on the basis of the altitude profile data and/or the current vehicle parameters and/or the current position data, a duration of the overrun conditions which are expected to occur.

6. Device according to one of Claims 2 to 5, **characterized in that**, when a case of instantaneous overrun conditions occurs, the processing device (14) is suitable for determining a continuing duration of the case of instantaneous overrun conditions on the basis of the altitude profile data and/or the current vehicle parameters and/or the current position data.

7. Device according to one of Claims 1 to 6, **characterized in that** the altitude profile data of the section of road which is to be travelled on by the vehicle are based on altitude profile data of a total route which are calculated in advance, which total route is predetermined by means of a starting position and a predetermined destination of the vehicle.

8. Device according to one of Claims 1 to 7, **characterized in that** the processing device (14) is suitable for controlling the air conditioning system (10) in such a way that the execution of the synchronization of the air conditioning operation with the overrun conditions is based at least on the presence of the at least one negative-gradient part of a section of road.

9. Device according to one of Claims 1 to 8, **characterized in that** the processing device (14) is suitable for assessing whether the air conditioning operation is being carried out, on the basis of inter-vehicle distance data relating to the distance between the vehicle and a further vehicle travelling ahead.

10. Device according to one of Claims 1 to 9, **characterized in that** the processing device (14) is suitable for controlling the air conditioning system (10) in such a way that the air conditioning operation is carried out by operating a compressor (18) which is coupled to a drive train (16), wherein the processing device (14) is also suitable for controlling the air conditioning system (10) in such a way that the air conditioning operation is ended if the compressor (18) is operated in an idling mode and/or is decoupled from the drive train (16).

11. Device according to one of Claims 2 to 10, **characterized in that** the current vehicle parameters comprise at least one element from the position data or altitude data of the vehicle, the vehicle speed, wheel speeds and/or yaw rates, a vehicle acceleration, a compressed air level of a brake system, a humidity level of a compressed air vessel or of a compressed air conditioning cartridge, an engine speed, the absolute value and/or the sign of an engine torque, clutch data and/or gearspeed data, retarder data of the vehicle and a distance from another vehicle travelling ahead.

12. Device according to one of Claims 1 to 11, **characterized in that** the processing device is suitable for obtaining at least the altitude profile data and/or the current position data from a navigation system (12).

13. Method for determining overrun conditions of a vehicle, in particular of a utility vehicle,
- wherein an expected occurrence of at least one case of overrun conditions is determined (S101-S103; S201-S208) at least as a function of altitude profile data of a section of road which is being travelled on and/or is to be travelled on by the vehicle,
- wherein the expected occurrence of the at least one case of overrun conditions is determined for a part of a section of road which lies ahead of the vehicle and has a predefined length,
- wherein an operating mode of at least one vehicle component is controlled as a function of the at least one case of overrun conditions of the vehicle which is determined and which is expected to occur,
- wherein the at least one vehicle component is an air conditioning system,
- wherein the air conditioning system (10) is controlled in such a way that when the case of overrun conditions which is determined and which is expected to occur occurs, the air conditioning system carries out an air conditioning operation synchronously (S104; S211),
- wherein the air conditioning system (10) is controlled in such a way that the execution of the synchronization of the air conditioning operation with the overrun conditions is based at least on the presence of the at least one negative-gradient part of a section of road,
- wherein the air conditioning system (10) is controlled in such a way that, when overrun conditions of the vehicle are not occurring, the air conditioning operation is also carried out when the air conditioning of the vehicle is absolutely necessary (S108).

14. Method according to Claim 13, **characterized in that** the expected occurrence of the at least one case of overrun conditions is also determined (S102; S205, S207) as a function of current position data of the vehicle and/or current vehicle parameters.

15. Method according to Claim 13, **characterized in that** it is determined whether one or more cases of overrun conditions can be expected to occur in the predefined part of the section of road.

16. Method according to one of Claims 13 to 15, **characterized in that** at least one negative-gradient part, at which the at least one case of overrun conditions can be expected to occur, of the section of road which is being travelled on and/or is to be travelled on is inferred on the basis of the altitude profile data.

17. Method according to one of Claims 13 to 16, **characterized in that** a duration of the overrun conditions which are expected to occur is determined (S209) on the basis of the altitude profile data and/or the current vehicle parameters and/or the current position data.

18. Method according to one of Claims 13 to 17, **characterized in that**, when a case of instantaneous overrun condition occurs, a continuing duration of the case of instantaneous overrun conditions is determined on the basis of the altitude profile data and/or the current vehicle parameters and/or the current position data.

19. Method according to one of Claims 13 to 18, **characterized in that** the altitude profile data of the section of road which is to be travelled on by the vehicle are based on altitude profile data of a total route which are calculated in advance, which total route is predetermined by means of a starting position and a predetermined destination of the vehicle (S203).

20. Method according to one of Claims 13 to 19, **characterized in that** on the basis of inter-vehicle distance data relating to the distance between the vehicle and a further vehicle travelling ahead it is assessed whether the air conditioning operation is being carried out.

21. Method according to one of Claims 13 to 20, **characterized in that** the air conditioning system (10) is controlled in such a way that the air conditioning operation is carried out by operating a compressor (18) which is coupled to a drive train (16), wherein the air conditioning system (10) is also controlled in such a way that the air conditioning operation is ended if the compressor (18) is operated in an idling mode and/or is decoupled from the drive train (16).

22. Method according to one of Claims 13 to 21, **characterized in that** the current vehicle parameters comprise at least one element from the position data or altitude data of the vehicle, the vehicle speed, wheel speeds and/or yaw rates, a vehicle acceleration, a compressed air level of a brake system, a humidity level of a compressed air vessel or of a compressed air conditioning catridge, an engine speed, the absolute value and/or the sign of an engine torque, clutch data and/or gearspeed data, retarder data of the vehicle and distance from another vehicle travelling ahead.

23. Method according to one of Claims 13 to 22, **characterized in that** at least the altitude profile data and/or the current position data are obtained from a navigation system (12).

## Revendications

1. Système de détermination du roulement sur la lancée d'un véhicule, notamment d'un véhicule utilitaire, comprenant un dispositif (14) de traitement, qui sert à déterminer le roulement sur la lancée, le dispositif (14) de traitement étant propre à déterminer l'apparition prévisible d'un roulement sur la lancée, au moins en fonction de données de profil de niveau d'une voie parcourue et/ou à parcourir par un véhicule,
- dans lequel le dispositif (14) de traitement est propre à effectuer la détermination de l'apparition prévisible du au moins un roulement sur la lancée, pour un tronçon de voie de longueur donnée à l'avance devant le véhicule,
- dans lequel le dispositif (14) de traitement est propre à commander un fonctionnement d'au moins un composant du véhicule, en fonction de la au moins une apparition prévisible du roulement sur la lancée du véhicule qui a été déterminée,
- dans lequel le au moins un composant du véhicule est un système de conditionnement d'air,
- dans lequel le dispositif (14) de traitement est propre à commander le système (10) de conditionnement d'air, de manière à ce qu'il effectue en synchronisme un fonctionnement de conditionnement d'air en présence de l'apparition prévisible déterminée du roulement sur la lancée et
- dans lequel le dispositif (14) de traitement est propre à commander l'installation (10) de conditionnement d'air, de manière à ce qu'elle effectue le fonctionnement de conditionnement d'air, lorsque le roulement sur la lancée du véhicule n'est pas présent, même si le conditionnement d'air du véhicule est absolument nécessaire.

2. Système suivant la revendication 1, **caractérisé en ce que** le dispositif (14) de traitement est propre à déterminer en outre l'apparition prévisible du au moins un roulement sur la lancée, en fonction de données de position instantanées du véhicule et/ou de paramètres instantanés du véhicule.

3. Système suivant la revendication 1, **caractérisé en ce que** le dispositif (14) de traitement est propre à déterminer si, d'une manière prévisible, un ou plusieurs roulements sur la lancée peuvent apparaître dans le tronçon de voie donné à l'avance.

4. Système suivant l'une des revendications 1 à 3, **caractérisé en ce que** le dispositif (14) de traitement est propre à déduire, sur la base des données de profil de niveau, un tronçon en pente de la voie parcourue et/ou à parcourir, où le au moins un roulement sur la lancée peut se produire de manière prévisible.

5. Système suivant l'une des revendications 2 à 4, **caractérisé en ce que** le dispositif (14) de traitement est propre à déterminer, sur la base des données de profil de niveau et/ou des paramètres instantanés du véhicule et/ou des données de position instantanées, une durée du roulement sur la lancée se produisant de manière prévisible.

6. Système suivant l'une des revendications 2 à 5, **caractérisé en ce que** le dispositif (14) de traitement est propre, en présence d'un roulement sur la lancée instantanée, à déterminer, sur la base des données de profil de niveau, et/ou des paramètres instantanés du véhicule et/ou des données de position instantanées, une durée restante du roulement sur la lancée instantanée.

7. Système suivant l'une des revendications 1 à 6, **caractérisé en ce que** les données de profil de niveau de la voie à parcourir par le véhicule reposent sur des données de profil de niveau calculées à l'avance d'une voie globale, qui est définie à l'avance, par une position de début et par une destination définie à l'avance du véhicule.

8. Système suivant l'une des revendications 1 à 7, **caractérisé en ce que** le dispositif (14) de traitement est propre à commander le système (10) de conditionnement d'air, de manière à ce que la synchronisation du fonctionnement en conditionnement d'air avec le roulement sur la lancée repose au moins sur la présence du au moins un tronçon en pente.

9. Système suivant l'une des revendications 1 à 8, **caractérisé en ce que** le dispositif (14) de traitement est propre à décider, sur la base de données de distance du véhicule à un autre véhicule précédent, si le fonctionnement de conditionnement d'air est réalisé.

10. Système suivant l'une des revendications 1 à 9, **caractérisé en ce que** le dispositif (14) de traitement est propre à commander le système (10) de conditionnement d'air, de manière à ce que le fonctionnement en conditionnement d'air soit effectué en faisant fonctionner un compresseur (18), couplé à une chaîne (16) d'entraînement, le dispositif (14) de traitement étant propre à commander, en outre, le système (10) de conditionnement d'air, de manière à mettre fin au fonctionnement en conditionnement d'air, lorsque le compresseur fonctionne en marche à vide et/ou est découplé de la chaîne (16) d'entraînement.

11. Système suivant l'une des revendications 2 à 10, **caractérisé en ce que** les paramètres instantanés du véhicule comprennent au moins un élément de donnée de position ou de hauteur du véhicule, de vitesse du véhicule, de vitesses de roue et/ou de taux d'embardée, d'une accélération du véhicule, d'un niveau d'air comprimé, d'un système de freinage, d'un niveau d'humidité d'un récipient d'air comprimé ou d'une cartouche de conditionnement d'air comprimé, d'un régime d'un moteur, de la valeur absolue et/ou du signe d'un couple de moteur, de données d'embrayage et/ou de boîte de vitesse, de données d'un ralentisseur du véhicule et d'une distance à un autre véhicule précédent.

12. Système suivant l'une des revendications 1 à 11, **caractérisé en ce que** le dispositif de traitement est propre à se procurer, d'un système (12) de navigation, au moins les données de profil de niveau et/ou les données instantanées de position.

13. Procédé de détermination d'un roulement sur la lancée d'un véhicule, notamment d'un véhicule utilitaire,
- dans lequel on détermine (S101 à S103; S201 à S208), une apparition prévisible d'au moins un roulement sur la lancée, au moins en fonction de données de profil de niveau d'une voie parcourue et/ou à parcourir par le véhicule,
- dans lequel on effectue la détermination de l'apparition prévisible du au moins un roulement sur la lancée, pour un tronçon de voie de longueur donnée à l'avance devant le véhicule,
- dans lequel on commande un fonctionnement d'au moins un composant du véhicule, en fonction d'une apparition prévisible du roulement sur la lancée du véhicule, qui a été déterminée,
- dans lequel le au moins un composant du véhicule est un système de conditionnement d'air,
- dans lequel on commande le système (12) de conditionnement d'air, de manière à ce qu'il effectue (S104; S211) en synchronisme, un fonctionnement en conditionnement d'air, en présence de l'apparition prévisible du roulement sur la lancée qui a été déterminée,
- dans lequel on commande le système (10) de conditionnement d'air, de manière à ce que la synchronisation du fonctionnement en conditionnement d'air avec le roulement sur la lancée repose au moins sur la présence du au moins un tronçon en pente,
- dans lequel on commande le système (10) de conditionnement d'air, de manière à effectuer le fonctionnement en conditionnement d'air, alors qu'il n'y a pas de roulement sur la lancée du véhicule, également lorsque le conditionnement d'air du véhicule est (S108) absolument nécessaire.

14. Système suivant la revendication 13, **caractérisé en ce que** l'on détermine (S102; S205, S207) l'apparition prévisible du au moins un roulement sur la lancée, en outre en fonction de données instantanées de position du véhicule et/ou de paramètres instantanés du véhicule.

15. Système suivant la revendication 13, **caractérisé en ce que** l'on détermine si un ou plusieurs roulements sur la lancée peuvent apparaître de manière prévisible dans le tronçon de voie donné à l'avance.

16. Système suivant l'une des revendications 13 à 15, **caractérisé en ce que** l'on déduit, sur la base des données de profil de niveau, au moins un tronçon en pente de la voie parcourue et/ou à parcourir où le au moins un roulement sur la lancée peut apparaître de manière prévisible.

17. Système suivant l'une des revendications 13 à 16, **caractérisé en ce que** l'on détermine (S209) une durée de l'apparition prévisible du roulement sur la lancée, sur la base des données de profil de niveau et/ou des paramètres instantanés du véhicule et/ou des données instantanées de position.

18. Système suivant l'une des revendications 13 à 17, **caractérisé en ce que**, en présence d'un roulement sur la lancée instantanée, on détermine une durée restante du roulement sur la lancée instantanée sur la base des données de profil de niveau et/ou des paramètres instantanés du véhicule et/ou des données de position instantanées.

19. Système suivant l'une des revendications 13 à 18, **caractérisé en ce que** les données de profil de niveau de la voie à parcourir par le véhicule reposent sur des données de profil de niveau calculées à l'avance d'une voie globale, qui est (S203) définie à l'avance par une position de départ et par une destination définie à l'avance du véhicule.

20. Système suivant l'une des revendications 13 à 19, **caractérisé en ce que** l'on décide, sur la base de données de distance du véhicule à un autre véhicule précédent, si le fonctionnement en conditionnement d'air sera réalisé.

21. Système suivant l'une des revendications 13 à 20, **caractérisé en ce que** l'on commande le système (10) de conditionnement d'air, de manière à effectuer le fonctionnement en conditionnement d'air en entraînant un compresseur (18) couplé à une chaîne (16) d'entraînement, le système (10) de conditionnement d'air étant en outre commandé de manière à mettre fin au fonctionnement de conditionnement d'air, lorsque le compresseur (18) fonctionne en marche à vide et/ou lorsqu'il est découplé de la chaîne (16) d'entraînement.

22. Système suivant l'une des revendications 13 à 21, **caractérisé en ce que** les paramètres instantanés du véhicule comprennent au moins un élément de donnée de position ou de hauteur du véhicule, de vitesse du véhicule, de vitesses de roue et/ou de taux d'embardée, d'une accélération du véhicule, d'un niveau d'air comprimé, d'un système de freinage, d'un niveau d'humidité d'un récipient d'air comprimé ou d'une cartouche de conditionnement d'air comprimé, d'un régime d'un moteur, de la valeur absolue et/ou du signe d'un couple de moteur, de données d'embrayage et/ou de boîte de vitesse, de données d'un ralentisseur du véhicule et d'une distance à un autre véhicule précédent.

23. Système suivant l'une des revendications 13 à 22, **caractérisé en ce que** l'on se procure, d'un système (12) de navigation, au moins les données de profil de niveau et/ou les données instantanées de position.
